# EUROPÄISCHE PATENTANMELDUNG

(11) **EP 1 053 918 A2**
(43) Veröffentlichungstag der Anmeldung: **22.11.2000**
(21) Anmeldenummer: 00109751.8
(22) Anmeldetag: 09.05.2000
(51) Int. Cl.: B60R 22/34, B60J 1/16, E05B 9/00, B29C 67/24

(54) **Kunststoffgehäuse mit verringertem Verzug**

(30) Priorität: 12.05.1999 DE 19921712
(71) Anmelder: Ticona GmbH, 65451 Kelsterbach (DE)
(72) Erfinder: Platz, Reinhold, Dr., 64367 Mühltal (DE)

(57) **Zusammenfassung**

Langfaserverstärkte Kunststoffe, in denen die Fasern durch Pultrusion eingearbeitet wurden, eignen sich zur Herstellung von verzugsarmen Bauteilen, d.h. zu Bauteilen mit hoher Formteilpräzision und Maßgenauigkeit, wobei die Anforderungen an die Festigkeit, Wärmeformbeständigkeit und auch, z.B. bei integrierten Fixierstellen für Kontakte, Leitungen und Anschlußverbindungen, an die Elastizität des Bauteils oder Teilen davon voll erfüllt werden. Insbesondere sind sie zur Herstellung Retraktorgehäusen, Getriebegehäusen, Schloßgehäusen oder Schloßdeckeln geeignet.

## Beschreibung

Die vorliegende Erfindung betrifft die Herstellung von formstabilen, d.h. verzugsarmen Schloß- Getriebe- und Retraktorgehäusen sowie Schloßdeckeln aus langfaserverstärkten Thermoplasten.

In vielen Anwendungen für Kunststoffe, bei denen es insbesondere auf Verzugsarmut von Bauteilen ankommt, werden diese Kunststoffe unter anderem mit Verstärkungsstoffen versehen. Die Auswahl der jeweils geeigneten Verstärkungsstoffe erfolgt dabei nach deren Verträglichkeit mit dem Kunststoff, dem Einfluß auf unterschiedliche mechanische Parameter der Kunststoffzusammensetzung, der Verarbeitbarkeit der verstärkten Kunststoffzusammensetzung und wird nicht zuletzt durch die Kosten für das Verstärkungsmaterial bestimmt.

Insbesondere in der Automobilindustrie werden zunehmend ehemals metallische Bauteile durch Kunststoffbauteile ersetzt. Dabei werden an die Bauteile aus Kunststoff die gleichen hohen Anforderungen, beispielsweise bezüglich Temperaturbeständigkeit, Chemikalienbeständigkeit, mechanische Festigkeit etc. gestellt. Diesen Anforderungen wird die Kunststoffindustrie durch die Bereitstellung sogenannter technischer oder Hochleistungskunststoffe wie Polyacetal, Polyarylensulfid etc. gerecht. In vielen Anwendungen werden diese oder auch andere Kunststoffe zusätzlich mit Verstärkungsstoffen versehen.

So ist es beispielsweise bekannt, Türschloßgehäuse, Getriebegehäuse für Fensterheber und Scheibenwischer sowie Gehäuse für elektrische oder elektronische Systeme aus verstärkten Kunststoffen herzustellen. Als Verstärkungsstoffe werden dazu häufig mineralische Materialien und Kurzglasfasern verwendet. Da es sich bei den genannten Bauteilen meist um komplexe dreidimensionale Strukturen mit mehr oder weniger feingliedrigen Verstrebungen, Stegen, Schnapphaken etc. handelt, also um Bauteile mit einer Vielzahl von Ecken und Kanten, ist die Verwendung langfaserverstärkter Kunststoffe zur Herstellung derartiger Bauteile bisher nicht für praktikabel erachtet worden. Insbesondere wird allgemein angenommen, daß es zu einer ungleichmäßigen Verteilung der Fasern im Bauteil kommt und daß besonders an dünnen Stellen, z.B. bei Verstrebungen oder allgemein dünnwandigen Elementen keine den Anforderungen entsprechende Festigkeit und Formstabilität erreicht wird.

Langfaserverstärkte Kunststoffe finden dagegen häufiger Verwendung zur Herstellung großflächiger oder großvolumiger Elemente wie Karosserieteile, Stoßfänger und Innenverkleidungen von Fahrzeugen oder Transportcontainer.

Es wurde nun gefunden, daß langfaserverstärkte Kunststoffe vorteilhaft für die Herstellung von Gehäusen für Schlösser und Getriebeeinheiten verwendet werden können, wenn die Fasern nach dem Pultrusionsverfahren in den Kunststoff eingearbeitet worden sind. Dieses Verhalten des Kunststoffes weist auch erhebliche Vorteile beim Umspritzen elektrischer Leiterbahnen (Stanzgittern) auf.

Gegenstand der Erfindung ist somit die Herstellung von formstabilen, verzugsarmen Schloß-Getriebe- und Retraktorgehäusen sowie Schloßdeckeln aus langfaserverstärkten Thermoplasten.

Überraschend zeigt sich, daß sich die erfindungsgemäß zu verwendenden langfaserverstärkten Kunststoffe im Spritzgußverfahren zu verzugsarmen Bauteilen, d.h. zu Bauteilen mit hoher Formteilpräzision und Maßgenauigkeit verarbeiten lassen, wobei die Anforderungen an die Festigkeit, Wärmeformbeständigkeit und auch, z.B. bei integrierten Fixierstellen für Kontakte, Leitungen und Anschlußverbindungen, an die Elastizität des Bauteils oder Teilen davon voll erfüllt werden. Entgegen vorherrschender Meinung wird dabei auch eine vorteilhafte Verteilung der Fasern im Bauteil, insbesondere auch an kritischen Stellen wie Ecken, Kanten oder dünnen Stellen erreicht.

Als Kunststoffe sind erfindungsgemäß allgemein thermoplastisch verarbeitbare Kunststoffe zu verwenden, da die Gehäuse aufgrund ihrer komplexen Struktur gewöhnlich unter Einsatz thermoplastischer Formgebungsverfahren, insbesondere im Spritzgußverfahren, hergestellt werden müssen. Vorteilhaft können folgende Kunststoffe sowohl für sich allein als auch in Mischung (d.h. als Blend) mit anderen thermoplastischen, duroplastischen oder elastomeren Kunststoffen eingesetzt werden:
Polyacetale, insbesondere Homopolymere des Formaldehyds oder seiner cyclischen Oligomeren wie Trioxan oder Tetroxan sowie entsprechende Copolymere, besonders solche mit cyclischen Ethern, cyclischen Acetalen und/oder linearen Polyacetalen, vorzugsweise solche mit mindestens 80 Mol-% Oxymethyleneinheiten;
Polyester, d.h. Polymere aus mindestens einer aromatischen Di- oder Polycarbonsäure und mindestens einem aliphatischen oder aromatischen Di- oder Polyalkohol oder Einheiten, die sich von Tetrahydrofuran ableiten, insbesondere Polyethylenterephthalat, Polybutylenterephthalat oder Poly(butylenterephthalat-co-butylenisophthalat);
Polyolefine, insbesondere Polyethylen, Polypropylen, Poly(1-buten)e, Polyisobutene, sowohl als Homo- oder Copolymer, sowie besonders hochmolekulare oder sterisch einheitliche Polyolefine.

Außerdem können auch Polyamide, insbesondere PA 6, PA 46 oder 66, Polycarbonate, cycloolefinische Copolymere, Polyarylensulflde, Polyarylenketone oder Blends von Styrolpolymeren vorteilhaft eingesetzt werden.

Die zu verwendenden Kunststoffe können auch chemisch modifiziert oder Recyclate der 1. oder 2. Generation sein oder enthalten. Sie können ferner Additive wie Stabilisatoren, Antistatika, Flammschutzmittel etc., Füllstoffe und/oder Farbstoffe enthalten.

Besonders bevorzugt wird als Kunststoff Polypropylen eingesetzt. Langfaserverstärkte Materialien auf Polypropylenbasis besitzen geringen Verzug, hervorragende mechanische Eigenschaften, minimale Feuchtigkeitsaufnahme, reduzierte Wärmedehnung, so daß auch Bauteile mit engen Toleranzen in hoher Präzision hergestellt werden können. Aufgrund seiner Eigenschaften erfüllt dieses Material die Anforderungen an Materialien zur Herstellung von Gurtretraktorgehäusen, Getriebegehäusen, Schloßdeckeln und Schloßgehäusen. Der mechanische Vertustfaktor von langfaserverstärkten Materialien auf Polypropylenbasis ermöglicht eine sehr gute Dämpfung des Körperschalles z.B. von Schloßgehäusen, was zu einer wesentlichen Verbesserung der Akustik im Vergleich zu anderen langfaserverstärkten Materialien wie Polybutylenterephthalat, Polyacetal oder Polyamid führt.
Durch die geringe Feuchtigkeitsaufnahme wird - insbesondere im Vergleich mit Polyamid - eine geringere Toleranz erreicht so daß die Maßhaltigkeit auch bei unterschiedlichen Feuchtigkeitsverhältnissen gewährleistet werden kann.
Zusätzlich besitzen langfaserverstärkte Materialien auf Polypropylenbasis einen Dichtevorteil gegenüber kurzfaserverstäkten Materialien und auf anderen Thermoplasten basierenden langfaserverstärkten Materialien.

Als Langfasermaterial können im allgemeinen Kohlenstoff- oder Glasfasern sowie metallische oder polymere Fasern verwendet werden. Diese können auch untereinander gemischt oder zusammen mit Kurzfasern oder anderen Verstärkungsstoffen eingesetzt werden. Typischer Weise haben geeignete Fasern einen Einzelfilamentdurchmesser von 3 bis 30 µm, vorzugsweise von 7 bis 24 µm und besonders bevorzugt von 10 bis 20 µm. Die Länge der Langfasern vor der Verarbeitung des langfaserverstärkten Kunststoffs beträgt im allgemeinen 1 bis 500 mm, vorzugsweise 3 bis 300 mm und besonders bevorzugt 10 bis 150 mm. Kurzfasern haben demgegenüber üblicherweise eine Länge kleiner 0,8 mm, typischer Weise kleiner 0,5 mm. Auch wenn bei der Verarbeitung des langfaserverstärkten Kunststoffs mit einer mehr oder weniger starken Reduzierung der Langfaserlänge zu rechnen ist, ist die Länge der im hergestellten Bauteil vorliegenden Langfasern immer noch deutlich größer als die von Kurzfasern.

Der Anteil der Langfaser am Kunststoffbauteil beträgt im allgemeinen 5 bis 70 Vol.-%, bevorzugt 10 bis 60 Vol.-% und besonders bevorzugt 15 bis 55 Vol.-%.

Der erfindungsgemäß zu verwendende langfaserverstärkte Kunststoff wird dadurch hergestellt, daß die Fasern in Form von Endlosfasern, Faserbündeln, Tapes oder Rovings über ein oder mehrere Spreitungselemente hinweg durch die Schmelze des Kunststoffs geführt werden. Dabei werden die Faserbündel an den Spreitungselementen aufgespreizt, so daß die Schmelze hindurch treten und die einzelnen Fasern optimal benetzen kann. Dieses Verfahren ist allgemein als Pultrusion bekannt. Besonders vorteilhaft ist es dabei, wenn bereits mit der Schmelze benetzte oder getränkte Rovings oder Tapes über ein Spreitungselement gezogen werden und somit die Schmelze durch die Rovings oder Tapes hindurchgepreßt wird.

Die Fasern können vor der Pultrusion auch mit einer Schlichte behandelt, mit Haftvermittlern imprägniert, durch Zugabe feinpulveriger Substanzen zusätzlich aufgeweitet oder anderweitig vorbehandelt werden. Nach der Pultrusion werden die mit dem Kunststoffmaterial imprägnierten Faserstränge wahlweise
a) direkt abgekühlt und zu Granulat geschnitten, wobei die Faserlänge der Länge des Granulates entspricht und somit einheitlich gestaltet werden kann,
b) oder erst in einen Extruder eingezogen, daraus als Strang entnommen, abgekühlt und zu Granulat geschnitten, wobei die Faserlänge im allgemeinen geringer als die Granulatlänge ist,
c) oder in einen Extruder eingezogen und von dort aus direkt der Verarbeitung zum Bauteil zugeführt.

Nach den Verfahren a) und b) wird das erhaltene Granulat anschließend in einem thermoplastischen Verfahrensschritt, vorteilhaft in einem Spritzguß- oder Plastifizier-Preß-Verfahren zum Bauteil verarbeitet, während nach Verfahren c) der Zwischenschritt über das Granulat entfällt. Die Zugabe von Zuschlagstoffen, weiterer Füllstoffe (wahlweise auch Kurzfasern) oder Blendkomponenten kann sowohl in der Schmelze bei der Pultrusion erfolgen als auch anschließend bei der Verarbeitung durch Mischen mit dem Granulat oder durch Zufuhr zum Extruder nach Variante c).

Durch Verwendung langer Fasern als Verstärkungsmaterial kann erreicht werden, daß die Gehäuse über die geforderten Temperaturbereiche eine reduzierte Wärmeausdehnung haben. Die Langfaser führt zu einem niedrigeren Ausdehnungskoeffizienten.
Ein weiterer Vorteil in der Verwendung von langfaserverstärkten Werkstoffen für Retraktorgehäuse, Getriebegehäuse, Schloßgehäuse und Schloßdeckel liegt in der erhöhten Schlagzähigkeit der langfaserverstärkten Werkstoffe im Vergleich zu kurzfaserverstärkten Materialien. Speziell sogenannte Droptests werden mit langfaserverstärkten Materialien besser bestanden als mit kurzfaserverstärkten Werkstoffen.
Durch die Orientierung der Fasern besitzen langfaserverstärkte Materialien außerdem einen geringen Verzug, auch im Vergleich zu kurzfaserverstärkten Materialien, da bei diesen die Faserorientierung größtenteils aufgehoben ist
Durch die geringere Zahl an Faserenden weisen langfaserverstärkte gegenüber kurzfaserverstärkten Materialien bessere Abrieb- und Verschleißeigenschaften auf. Dies ist speziell dort gefragt, wo die Materialien mit Lagerstellen eingesetzt werden, also insbesondere bei Einsatz in den erfindungsgemäßen Bauteilen.

Zu den Gehäusen, die erfindungsgemäß aus den vorgenannten langfaserverstärkten Kunststoffen hergestellt werden können, gehören Türschloßgehäuse, Getriebegehäuse (auch für elektrische Fensterheber und Scheibenwischer) sowie Gurtretraktorgehäuse. Diese können entsprechend dem vorgegebenen Design Verstrebungen, Stege, Schnapphaken, Halterungen für andere Elemente sowie eine Vielzahl von Ecken, Kanten, Aussparungen oder Gewinden aufweisen.

## Patentansprüche

1. Retraktorgehäuse, Getriebegehäuse, Schloßgehäuse oder Schloßdeckel, wobei das Bauteil aus einem langfaserverstärkten Kunststoff, in den die Fasern durch Pultrusion eingearbeitet wurden, hergestellt wird.

2. Retraktorgehäuse, Getriebegehäuse, Schloßgehäuse oder Schloßdeckel nach Anspruch 1, wobei das Bauteil eine sehr gute Dämpfung des Körperschalles besitzt.

3. Retraktorgehäuse, Getriebegehäuse, Schloßgehäuse oder Schloßdeckel nach Anspruch 1 oder 2, wobei das Bauteil eine geringe Wasseraufnahme und erhöhte Formstabilität besitzt.

4. Retraktorgehäuse, Getriebegehäuse, Schloßgehäuse oder Schloßdeckel nach einem oder mehreren der Ansprüche 1 bis 3, wobei als Kunststoff Polyacetal, Polyolefin, Polyester, Polyamid, Polyarylensulfid oder cycloolefinisches Copolymer eingesetzt wird.

5. Retraktorgehäuse, Getriebegehäuse, Schloßgehäuse oder Schloßdeckel nach einem oder mehreren der Ansprüche 1 bis 4, wobei das Fasermaterial der Langfaser ausgewählt ist aus Kohlenstoffasern, Glasfasern, metallischen Fasern oder polymeren Fasern.

6. Retraktorgehäuse, Getriebegehäuse, Schloßgehäuse oder Schloßdeckel nach einem oder mehreren der Ansprüche 1 bis 5, wobei der Langfaseranteil im langfaserverstärkten Kunststoff 5 bis 70 Vol.-% beträgt.

7. Retraktorgehäuse, Getriebegehäuse, Schloßgehäuse oder Schloßdeckel nach einem oder mehreren der Ansprüche 1 bis 5, wobei der Langfaseranteil im langfaserverstärkten Kunststoff 10 bis 60 Vol.-% beträgt.

8. Retraktorgehäuse, Getriebegehäuse, Schloßgehäuse oder Schloßdeckel nach einem oder mehreren der Ansprüche 1 bis 5, wobei der langfaserverstärkte Kunststoff Zuschlagstoffe, Füllstoffe, Verstärkungsstoffe oder Blendkomponenten enthält.
